(19)

**Europäisches Patentamt**
**European Patent Office**
**Office européen des brevets**

(11)  **EP 4 394 623 A1**

(12) **EUROPEAN PATENT APPLICATION**
published in accordance with Art. 153(4) EPC

(43) Date of publication:
**03.07.2024  Bulletin 2024/27**

(51) International Patent Classification (IPC):
**G06F 17/16** (2006.01)

(21) Application number: **22888807.9**

(22) Date of filing: **16.05.2022**

(86) International application number:
**PCT/CN2022/092990**

(87) International publication number:
**WO 2023/077770 (11.05.2023 Gazette 2023/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.11.2021  CN 202111291162**

(71) Applicant: **Hygon Information Technology Co.,
Ltd.**
**Tianjin 300392 (CN)**

(72) Inventors:
• **CHEN, Qing**
  **Tianjin 300392 (CN)**

• **YANG, Rengcai**
  **Tianjin 300392 (CN)**
• **YUAN, Qing**
  **Tianjin 300392 (CN)**
• **YANG, Yu**
  **Tianjin 300392 (CN)**
• **WANG, Bin**
  **Tianjin 300392 (CN)**
• **PAN, Yu**
  **Tianjin 300392 (CN)**

(74) Representative: **Regimbeau
20, rue de Chazelles
75847 Paris Cedex 17 (FR)**

(54)  **DATA PROCESSING METHOD, APPARATUS AND DEVICE, AND STORAGE MEDIUM**

(57)    Provided in the present disclosure are a data processing method, apparatus and device, which are applied to a matrix operation, and a storage medium. The data processing method includes: determining at least one first vector register, which stores a first matrix, and at least one second vector register, which stores a second matrix, wherein the first matrix includes a plurality of pieces of first operation data, and the second matrix includes a plurality of pieces of second operation data; acquiring first data selection information and second data selection information; selecting at least one piece of first operation data from among the plurality of pieces of first operation data on the basis of the first data selection information, so as to obtain at least one piece of first target operation data; and selecting at least one piece of second operation data from among the plurality of pieces of second operation data on the basis of the second data selection information, so as to obtain at least one piece of second target operation data. By means of the data processing method, full use is made of matrix characteristics, so as to effectively multiplex data between threads, thereby greatly reducing the number of times of data reading, and reducing power consumption.

FIG. 1

**Description**

CROSS-REFERENCE TO RELATED APPLICATION

The present application claims the priority to Chinese Patent Application No. 202111291162.1, filed on November 3, 2021, the entire disclosure of which is incorporated herein by reference as portion of the present application.

TECHNICAL FIELD

Embodiments of the present disclosure relate to a data processing method, a data processing apparatus, a data processing device, and a computer-readable storage medium.

BACKGROUND

A graphic process unit (GPU) includes a large number of data processing units. Each data processing unit is of a single-instruction-multiple-data (SIMD) structure which is capable of controlling a same operation to be performed on a plurality of threads simultaneously by performing one instruction. Each SIMD structure has its own dedicated group of vector registers and a large number of arithmetic units capable of concurrent execution, e.g., multiplication units. The SIMD structure has high concurrency and thus has been extensively applied to matrix operations.

SUMMARY

At least one embodiment of the present disclosure provides a data processing method, applied to a matrix operation and the method includes: determining at least one first vector register storing a first matrix and at least one second vector register storing a second matrix, wherein the first matrix includes a plurality of pieces of first operational data, and the second matrix includes a plurality of pieces of second operational data; obtaining first data selection information and second data selection information; selecting at least one piece of first operational data from the plurality of pieces of first operational data based on the first data selection information to obtain at least one piece of first target operational data, providing the at least one piece of first target operational data at a multiple which is equal to a second matrix dimension number of the second matrix to a plurality of arithmetic units to determine a plurality of first multiplication factors in one-to-one correspondence to the plurality of arithmetic units; and selecting at least one piece of second operational data from the plurality of pieces of second operational data based on the second data selection information to obtain at least one piece of second target operational data, providing the at least one piece of second target operational data at a multiple which is equal to a first matrix dimension number of the first matrix to the plurality of arithmetic units to determine a plurality of second multiplication factors in one-to-one correspondence to the plurality of arithmetic units, wherein the first matrix dimension number and the second matrix dimension number are both positive integers, and a type of the first matrix dimension number is different from a type of the second matrix dimension number.

For example, in the data processing method provided by an embodiment of the present disclosure, the at least one piece of first target operational data includes M pieces of first target operational data; the plurality of arithmetic units include P arithmetic unit groups and each arithmetic unit group includes M arithmetic units; the second matrix dimension number is P; M and P are both positive integers; the providing the at least one piece of first target operational data at a multiple which is equal to a second matrix dimension number of the second matrix to a plurality of arithmetic units to determine a plurality of first multiplication factors in one-to-one correspondence to the plurality of arithmetic units include: replicating the M pieces of first target operational data for P times to obtain P sets of first target operational data, wherein each set of first target operational data includes the M pieces of first target operational data; and providing the P sets of first target operational data to the P arithmetic unit groups, respectively, to determine the plurality of first multiplication factors, wherein M first multiplication factors corresponding to the M arithmetic units of each arithmetic unit group are the M pieces of first target operational data, respectively.

For example, in the data processing method provided by an embodiment of the present disclosure, the at least one piece of second target operational data includes P pieces of second target operational data; the plurality of arithmetic units include P arithmetic unit groups and each arithmetic unit group includes M arithmetic units; the first matrix dimension number is M; M and P are both positive integers; the providing the at least one piece of second target operational data at a multiple which is equal to a first matrix dimension number of the first matrix to the plurality of arithmetic units to determine a plurality of second multiplication factors in one-to-one correspondence to the plurality of arithmetic units include: replicating the P pieces of second target operational data for M times to obtain P sets of second target operational data, wherein each set of second target operational data corresponds to one piece of second target operational data and includes M pieces of same second target operational data; and providing the P sets of second target operational data to the P arithmetic unit groups, respectively, to determine the plurality of second multiplication factors, wherein M second multiplication factors corresponding to the M arithmetic units of each arithmetic unit group are the same and are the second target operational data in the set of second target operational data corresponding to each arithmetic unit group.

For example, in the data processing method provided by an embodiment of the present disclosure, the matrix operation includes a plurality of threads; the plurality of arithmetic units correspond to the plurality of threads, respectively; the at least one first vector register has a plurality of first paths; the at least one second vector register has a plurality of second paths; each of the plurality of threads corresponds to a corresponding first path of the plurality of first paths and a corresponding second path of the plurality of second paths; the plurality of pieces of first operational data correspond to the plurality of first paths, and the plurality of pieces of second operational data correspond to the plurality of second paths; the selecting at least one piece of first operational data from the plurality of pieces of first operational data based on the first data selection information to obtain at least one piece of first target operational data includes: based on the first data selection information, determining at least one first path selected from the plurality of first paths and taking at least one piece of first operational data corresponding to the at least one first path selected as the at least one piece of first target operational data; and the selecting at least one piece of second operational data from the plurality of pieces of second operational data based on the second data selection information to obtain at least one piece of second target operational data includes: based on the second data selection information, determining at least one second path selected from the plurality of second paths and taking at least one piece of second operational data corresponding to the at least one second path selected as the at least one piece of second target operational data.

For example, the data processing method provided by an embodiment of the present disclosure further includes: determining at least one destination vector register; performing a multiplication operation by the plurality of arithmetic units based on the plurality of first multiplication factors and the plurality of second multiplication factors to obtain a plurality of multiplication operation results corresponding to the plurality of arithmetic units, wherein each arithmetic unit is configured to perform the multiplication operation on a first multiplication factor and a second multiplication factor corresponding to each arithmetic unit to obtain a multiplication operation result corresponding to each arithmetic unit; and transmitting the plurality of multiplication operation results to the at least one destination vector register.

For example, in the data processing method provided by an embodiment of the present disclosure, the transmitting the plurality of multiplication operation results to the at least one destination vector register includes: performing an addition operation on the plurality of multiplication operation results and a plurality of pieces of storage data stored in the at least one destination vector register, in one-to-one correspondence, to obtain a plurality of addition operation results; and storing the plurality of addition operation results in the at least one destination vector register.

For example, in the data processing method provided by an embodiment of the present disclosure, the obtaining first data selection information and second data selection information includes: obtaining a data selection instruction; and parsing the data selection instruction to obtain the first data selection information and the second data selection information.

For example, in the data processing method provided by an embodiment of the present disclosure, the at least one first vector register includes a first target vector register and the at least one piece of first target operational data is stored in the first target vector register; and the at least one second vector register includes a second target vector register and the at least one piece of second target operational data is stored in the second target vector register.

For example, in the data processing method provided by an embodiment of the present disclosure, the first matrix is a column matrix and the at least one piece of first target operational data is located in a same column of the first matrix; and the second matrix is a row matrix and the at least one piece of second target operational data is located in a same row of the second matrix.

For example, in the data processing method provided by an embodiment of the present disclosure, the determining at least one first vector register storing a first matrix and at least one second vector register storing a second matrix includes: obtaining at least one first address and at least one second address; determining the at least one first vector register based on the at least one first address; and determining the at least one second vector register based on the at least one second address.

For example, in the data processing method provided by an embodiment of the present disclosure, the obtaining at least one first address and at least one second address includes: obtaining a matrix operation instruction; and parsing the matrix operation instruction to obtain the at least one first address and the at least one second address.

For example, in the data processing method provided by an embodiment of the present disclosure, the obtaining first data selection information and second data selection information includes: parsing the matrix operation instruction to obtain the first data selection information and the second data selection information.

For example, the data processing method provided by an embodiment of the present disclosure further includes: obtaining at least one first data reading instruction and at least one second data reading instruction; parsing the at least one first data reading instruction to obtain at least one first read address and at least one first address; reading the plurality of pieces of first operational data from a memory based on the at least one first read address, and based on the at least one first address, determining the at least one first vector register and writing the plurality of pieces of first operational data in the at least one first vector register; parsing the at least one second data reading instruction to obtain at least one second read address and at least one second address; and reading the plurality of pieces of second operational data from the memory based on the at least one second read address, and based on the at least one second address, determining the at least one second vector register and writing the plurality of pieces of second operational data in the at least one second vector register.

For example, in the data processing method provided by an embodiment of the present disclosure, wherein the plurality of arithmetic units concurrently perform a multiplication operation.

At least one embodiment of the present disclosure provides a data processing apparatus, applied to a matrix operation, the data processing apparatus includes: a register determination unit, configured to determine at least one first vector register storing a first matrix and at least one second vector register storing a second matrix, wherein the first matrix includes a plurality of pieces of first operational data, and the second matrix includes a plurality of pieces of second operational data; an information obtaining unit, configured to obtain first data selection information and second data selection information; a data selection unit, configured to select at least one piece of first operational data from the plurality of pieces of first operational data based on the first data selection information to obtain at least one piece of first target operational data and select at least one piece of second operational data from the plurality of pieces of second operational data based on the second data selection information to obtain at least one piece of second target operational data; and a data broadcasting unit, configured to provide the at least one piece of first target operational data at a multiple which is equal to a second matrix dimension number of the second matrix to a plurality of arithmetic units to determine a plurality of first multiplication factors in one-to-one correspondence to the plurality of arithmetic units, and provide the at least one piece of second target operational data at a multiple which is equal to a first matrix dimension number of the first matrix to the plurality of arithmetic units to determine a plurality of second multiplication factors in one-to-one correspondence to the plurality of arithmetic units, wherein the first matrix dimension number and the second matrix dimension number are both positive integers, and a type of the first matrix dimension number is different from a type of the second matrix dimension number.

At least one embodiment of the present disclosure provides a data processing device, including: a processor; and a storage medium storing computer-executable instructions, wherein the computer-executable instructions, when executed by the processor, implement the data processing method according to any one of the embodiments of the present disclosure.

At least one embodiment of the present disclosure provides a computer-readable storage medium, configured to non-transiently store computer-executable instructions, wherein the computer-executable instructions, when executed by a processor, implement the data processing method according to any one of the embodiments of the present disclosure.

BRIEF DESCRIPTION OF DRAWINGS

To describe the technical solutions of the embodiments of the present disclosure more clearly, the accompanying drawings for the embodiments will be introduced below briefly. Apparently, the accompanying drawings in the following description merely involve some embodiments of the present disclosure and are not limiting of the present disclosure.

FIG. 1 illustrates a schematic flowchart of a data processing method for a matrix operation according to an embodiment of the present disclosure;

FIG. 2 illustrates a schematic diagram of a correspondence between a thread for performing a matrix operation and a path of a vector register according to an embodiment of the present disclosure;

FIG. 3 illustrates a schematic diagram of one example of data processing of a matrix operation according to an embodiment of the present disclosure;

FIG. 4 illustrates a schematic block diagram of one example of a data processing apparatus applied to a matrix operation according to an embodiment of the present disclosure;

FIG. 5 illustrates a working schematic diagram of an example data selection unit and data broadcasting unit involved in the latter part of data processing according to an embodiment of the present disclosure; and

FIG. 6 illustrates a schematic diagram of a data processing device according to an embodiment of the present disclosure.

DETAILED DESCRIPTION

In order to make objects, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "left," "right" and the like are only used to indicate relative position relationship, and when the position of the object which is described is changed, the relative position relationship may be changed accordingly.

To make the following description of the embodiments of the present disclosure clear and concise, the detailed description of some well-known functions and well-known components is omitted in the present disclosure.

A processing unit of SIMD structure of a GPU controls a same operation to be performed on a plurality of threads simultaneously by performing a matrix operation instruction to realize matrix reading, arithmetic operation, result storing, etc. For example, for SIMD 32 structure, by executing one instruction, an operation to be performed on 32 threads can be controlled simultaneously. Each SIMD 32 structure has its own dedicated group of vector registers, and each vector register has 32 paths. The following Table 1 shows a universal matrix operation instruction which is a traditional instruction used when performing a matrix operation in the SIMD structure. The matrix operation instruction includes a source operand 1, a source operand 2, a source operand 3, a destination operand, and an operational code. The source operand 1 is configured to indicate an address of a first vector register. The source operand 2 is configured to indicate an address of a second vector register. The source operand 3 is configured to indicate an address of a third vector register. The destination operand is configured to indicate an address of a destination vector register for storing a result of a matrix operation. The operational code is configured to indicate a specific operation performed by the matrix operation instruction, i.e., a type of the matrix operation instruction. For example, by setting the operational code in the matrix operation instruction to a corresponding value of a multiplication-addition operation, the matrix operation instruction is a matrix multiplication-addition instruction; and by setting the operational code in the matrix operation instruction to a corresponding value indicative of a multiplication operation, the matrix operation instruction is a matrix operation instruction.

Table 1

| Operational Code | Destination Operand | Source Operand 3 | Source Operand 2 | Source Operand 1 |
|---|---|---|---|---|

For example, a matrix operation instruction with an universal matrix operation instruction format is used under the SIMD 32 structure to perform matrix multiplication operation A*B, where the matrix A is a matrix having a size of 8*4, i.e., the matrix A includes eight rows and four columns of data; the four columns are column vectors A(:,1), A(:,2), A(:,3), and A(:,4), respectively; each column vector includes 8 pieces of data; the matrix B is a matrix having a size of 4*4, i.e., the matrix B includes four rows and four columns of data; the four rows are row vectors B(1,:), B(2,:), B(3,:), and B(4,:), respectively; and each row vector includes 4 pieces of data.

For the above matrix multiplication operation, the commonly used method is to read, via a cache, the data of the matrix A and the data of the matrix B from a double-data-rate synchronous dynamic random-access memory (DDR, one of internal memories) into vector registers one by one, and then read the data out of the vector registers and transmit the data to arithmetic units for operations. Firstly, the four column vectors A(:,1), A(:,2), A(:,3), and A(:,4) of the matrix A are read into four vector registers (referred to as V0, V1, V2, and V3, respectively), respectively, and then the four row vectors B(1,:), B(2,:), B(3,:), and B(4,:) of the matrix B are read into four vector registers (referred to as V80, V81, V82, and V83), respectively. In each operation, the data corresponding to a first path of the vector register V0, V1, V2, or V3 and the data corresponding to a second path of the vector register V80, V81, V82, or V83 are send to the corresponding arithmetic unit for the multiplication operation. This operation process involves a plurality of processes of reading data from the DDR. For example, in this operation process, the data is read from the DDR for 8 times, thus resulting in unwanted data redundancy and extra power consumption.

At least one embodiment of the present disclosure provides a data processing method, applied to a matrix operation and including: determining at least one first vector register storing a first matrix and at least one second vector register storing a second matrix, where the first matrix includes a plurality of pieces of first operational data, and the second matrix includes a plurality of pieces of second operational data; obtaining first data selection information and second data selection information; selecting at least one piece of first operational data from the plurality of pieces of first operational data based on the first data selection information to obtain at least one piece of first target operational data, providing the at least one piece of first target operational data at a multiple which is equal to a second matrix dimension number of the second matrix to a plurality of arithmetic units to determine a plurality of first multiplication factors in one-to-one correspondence to the plurality of arithmetic units; and selecting at least one piece of second operational data from the plurality of pieces of second operational data based on the second data selection information to obtain at least one piece of second target operational data, providing the at least one piece of second target operational data at a multiple which is equal to a first matrix dimension number of the first matrix to the plurality of arithmetic units to determine a plurality of second multiplication factors in one-to-one correspondence to the plurality of arithmetic units, where the first matrix dimension number and the second matrix dimension number are both positive integers, and a type of the first matrix dimension number is different from a type of the second matrix dimension number.

According to the data processing method applied to the matrix operation provided in the embodiment of the present disclosure, a first path is selected from a plurality of first paths of the first vector register and a second path is selected from a plurality of second paths of the second vector register, and the operational data corresponding to the selected first path and the selected second path is replicated to participate in the multiplication operation of a corresponding thread. Matrix characteristics are fully utilized and data is effectively reused between threads to reduce the data redundancy between the threads, thereby greatly reducing the times of reading data from the DDR and reducing the power consumption.

In the embodiment of the present disclosure, in the process of the matrix operation, the first operational data in the first matrix may be selected and replicated, and the second operational data in the second matrix may be selected and replicated, thereby realizing the matrix operation. Thus, in the process of reading data (e.g., the first operational data and the second operational data) from the DDR and writing the data in the vector registers, it is unnecessary to replicate the read data (e.g., the first operational data and the second operational data), thereby reducing the times of reading the data from the DDR (e.g., in some cases, all of the first operational data in the first matrix may be read and written in the vector registers through one data reading process, and all of the second operational data in the second matrix may be read and written in the vector registers through one data reading process), increasing the speed of reading the data from the DDR, saving the time of reading the data from the DDR, saving power, reducing or avoiding data redundancy caused in the process of writing the data in the vector registers, reducing the storage space for storing the first operational data of the first matrix and the second operational data of the second matrix (e.g., reducing the number of the vector registers storing the first matrix and the second matrix), and saving the storage space.

At least one embodiment of the present disclosure further provides a data processing apparatus, a data processing device, and a computer-readable storage medium corresponding to the data processing method.

The embodiments of the present disclosure will be further described below with reference to the accompanying drawings.

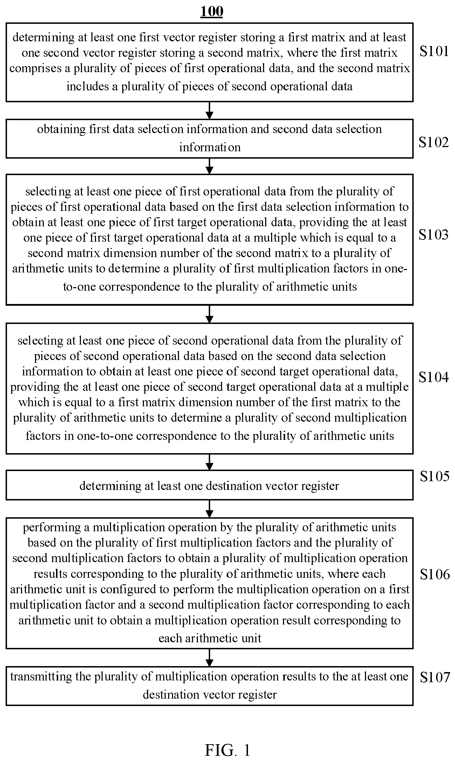

FIG. 1 illustrates a schematic flowchart of a data processing method 100 for a matrix operation according to an embodiment of the present disclosure. For example, the matrix operation is used for performing an operation on a first matrix and a second matrix.

As shown in FIG. 1, the data processing method 100 provided in the embodiment of the present disclosure includes steps S101 to step S104.

Step S101: determining at least one first vector register storing a first matrix and at least one second vector register storing a second matrix, where the first matrix comprises a plurality of pieces of first operational data, and the second matrix includes a plurality of pieces of second operational data.

Step S102: obtaining first data selection information and second data selection information.

Step S103: selecting at least one piece of first operational data from the plurality of pieces of first operational data based on the first data selection information to obtain at least one piece of first target operational data, providing the at least one piece of first target operational data at a multiple which is equal to a second matrix dimension number of the second matrix to a plurality of arithmetic units to determine a plurality of first multiplication factors in one-to-one correspondence to the plurality of arithmetic units.

Step S104: selecting at least one piece of second operational data from the plurality of pieces of second operational data based on the second data selection information to obtain at least one piece of second target operational data, providing the at least one piece of second target operational data at a multiple which is equal to a first matrix dimension number of the first matrix to the plurality of arithmetic units to determine a plurality of second multiplication factors in one-to-one correspondence to the plurality of arithmetic units.

For example, the first matrix dimension number and the second matrix dimension number are both positive integers, and a type of the first matrix dimension number is different from a type of the second matrix dimension number.

The first matrix dimension number represents the number of rows of a matrix, and the second matrix dimension number represents the number of columns of a matrix. For example, a matrix is a matrix of 8*4. That is, the first matrix dimension number of the matrix is 8 and the second matrix dimension number of the matrix is 4.

In the embodiment of the present disclosure, based on the characteristics of the matrix operation, different selective replication operations are performed on the first operational data in the first matrix and the second operational data in the second matrix. That is, at least one piece of first target operational data is replicated at the multiple which is equal to the second matrix dimension number of the second matrix and at least one piece of second target operational data is replicated at the multiple which is equal to the first matrix dimension number of the first matrix such that the replicated data meets the implementation processes of the matrix operations.

Moreover, in the process of a matrix operation, the first operational data in the first matrix may be selected and replicated and the second operational data in the second matrix may be selected and replicated based on the characteristics of the matrix operation; and therefore, the first operational data and the second operational data stored in the vector registers can be not limited by the matrix operation, and the storage processes and the storage positions of the first operational data and the second operational data can be more changeable, avoiding data redundancy.

According to the embodiment of the present disclosure, step S101 includes: obtaining at least one first address and at least one second address; determining the at least one first vector register based on the at least one first address; and determining the at least one second vector register based on the at least one second address. The first address or the second address may be an index of the first vector register or the second vector register among all registers corresponding to the processing unit of SIMD structure.

According to the embodiment of the present disclosure, the obtaining at least one first address and at least one second address includes: obtaining a matrix operation instruction; and parsing the matrix operation instruction to obtain the at least one first address and the at least one second address.

For example, the at least one first address represents the address of the at least one first vector register storing the first matrix and the at least one second address represents the address of the at least one second vector register storing the second matrix. The at least one first vector register may be determined based on the at least one first address and the at least one second vector register may be determined based on the at least one second address. The matrix operation instruction may be obtained from a memory (e.g., a DDR). In some embodiments of the present disclosure, the format of the matrix operation instruction may be as shown in the following Table 2. The matrix operation instruction may include a source operand 1, a source operand 2, a source operand 3, a destination operand, an operational code, and a control domain. The meanings of the source operand 1, the source operand 2, the source operand 3, the destination operand, and the operational code are the same as the meanings of the parts of the matrix operation instruction shown in the above Table 1, which will not be described here redundantly. The control domain will be described in detail below. For example, in step S101, by parsing the matrix operation instruction, the at least one first address and the at least one second address may be obtained according to the source operand 1 and the source operand 2.

Table 2

| Operational Code | Control Domain | Destination Operand | Source Operand 3 | Source Operand 2 | Source Operand 1 |
|---|---|---|---|---|---|

For example, the first matrix may be stored in the at least one first vector register and the second matrix may be stored in the at least one second vector register. The at least one first vector register has a plurality of first paths and the at least one second vector register has a plurality of second paths. In some examples, the first vector register and the second vector register have a same number of paths. The first operational data of the first matrix corresponds to the first paths of the first vector register. That is to say, the first paths of the first vector register may transmit the corresponding first operational data. The second operational data of the second matrix corresponds to the second paths of the second vector register. That is to say, the second paths of the second vector register may transmit the corresponding second operational data. For example, for the SIMD 32 structure, the first vector register has 32 first paths and the second vector register has 32 second paths. Therefore, the first vector register or the second vector register may provide 32 pieces of data at most in the stored matrix for operations. In some other examples, the number of the first paths the first vector register has and the number of the second paths the second vector register has may be different.

For example, for matrix multiplication A*B, a matrix A is one example of the first matrix. The matrix A has a size of 8*4. The matrix A includes four column vectors A(:,1), A(:,2), A(:,3), and A(:,4), and each column vector includes 8 pieces of data. a matrix B is one example of the second matrix. The matrix B has a size of 4*4. The matrix B includes four row vectors B(1,:), B(2,:), B(3,:), and B(4,:), and each row vector includes 4 pieces of data. The 32 pieces of data of the matrix A are the plurality of first operational data and the 16 pieces of data of the matrix B are the plurality of second operational data. Assuming that each piece of data in the matrix A and the matrix B includes 32 bits (binary digits) and each vector register (the first vector register or the second vector register) is a vector register capable of storing 32 32-bit scalar elements, the 32 pieces of data of the matrix A may be stored in one first vector register and the 16 pieces of data of the matrix B may be stored in one second vector register. The 32 first paths 0-31 of the first vector register storing the matrix A correspond to the 32 pieces of data of the matrix A, respectively. For example, the first paths 0-7 correspond to the 8 pieces of data of the column vector A(:,1); the first paths 8-15 correspond to the 8 pieces of data of the column vector A(:,2); the first paths 16-23 correspond to the 8 pieces of data of the column vector A(:,3); and the first paths 24-31 correspond to the 8 pieces of data of the column vector A(:,4). The first 16 paths of the 32 second paths of the second vector register storing the matrix B correspond to the 16 pieces of data of the matrix B, respectively. For example, the second paths 0-3 correspond to the 4 pieces of data of the row vector B(1,:); the second paths 4-7 correspond to the 4 pieces of data of the row vector B(2,:); the second paths 8-11 correspond to the 4 pieces of data of the row vector B(3,:); and the second paths 12-15 correspond to the 4 pieces of data of the row vector B(4,:). Other second paths of the second vector register do not correspond to any data in the matrix B. It needs to be noted that if the matrix B includes 32 pieces of data, the 32 second paths of the second vector register storing the matrix B correspond to the 32 pieces of data of the matrix B, respectively.

For example, when the number of pieces of data included in the matrix A is greater than 32, the data of the matrix A may be stored in a plurality of first vector registers. When the number of pieces of data included in the matrix B is greater than 32, the data of the matrix B may be stored in a plurality of second vector registers.

The present disclosure is described by taking for example that each piece of data in the matrix A and the matrix B includes 32 bits (binary digits) and each vector register (the first vector register or the second vector register) is a vector register capable of storing 32 32-bit scalar elements, but the embodiments of the present disclosure are not limited thereto.

In step S102, the first data selection information and the second data selection information may be obtained.

For example, in some embodiments, a data selection instruction may be obtained from a memory (e.g., a DDR). The data selection instruction includes the first data selection information and the second data selection information. The first data selection information and the second data selection information may be obtained by parsing the data selection instruction. The data selection instruction is as shown in the following Table 3. For example, the data selection instruction may also include a reserved field to realize other functions (which are set by a user according to actual situations).

Table 3

| Reserved Field | Second Data Selection Information | First Data Selection Information |
| --- | --- | --- |

For example, in some other embodiments, a matrix operation instruction may be obtained from a memory (e.g., a DDR). The first data selection information and the second data selection information may be obtained by parsing the matrix operation instruction. According to the embodiments of the present disclosure, the matrix operation instruction is as shown in Table 2. Table 2 has a control domain added on the basis of the matrix operation instruction shown in Table 1. The control domain includes instruction fields SRC1_SVF_MODE and SRC2_SVF_MODE, where SRC1_SVF_MODE is the first data selection information for operating the first operational data in the first matrix to guide the selection and replication of the data in the first matrix involved in the operation during the matrix operation process, and SRC2_SVF_MODE is the second data selection information for operating the second operational data in the second matrix to guide the selection and replication of the data in the second matrix involved in the operation during the matrix operation process.

According to the embodiments of the present disclosure, the matrix operation instruction and the data selection instruction may be two instructions or two parts of one instruction. For example, in the case of the matrix operation instruction and the data selection instruction being two instructions, the obtaining the first data selection information and the second data selection information may include: obtaining the data selection instruction and parsing the data selection instruction to obtain the first data selection information and the second data selection information. In the case of the matrix operation instruction and the data selection instruction serving as two parts of one instruction, the obtaining the first data selection information and the second data selection information may include: obtaining and parsing the matrix operation instruction to obtain the first data selection information and the second data selection information. The following description is made by taking for example that the matrix operation instruction and the data selection instruction are two parts of one instruction. For example, the matrix operation instruction and the data selection instruction may be two parts of a same SIMD instruction. That is, the SIMD instruction includes the matrix operation instruction and the data selection instruction.

For example, in some embodiments, the SIMD instruction may have a length of 64 bits. The first 48 bits [0:47] are the matrix operation instruction part, and the definition of each field in the matrix operation instruction and the related description thereof are as shown in Table 4. The latter 16 bits [48:63] are the data selection instruction part, and the definition of each field in the data selection instruction and the related description thereof are as shown in Table 5.

Referring to Table 4, in the matrix operation instruction part of the SIMD instruction, the 0th to 7th bits [0:7] represent the field of the source operand 1, and this field is capable of indicating the address of the at least one first vector register storing the first matrix. The 8th to 15th bits [8:15] represent the field of the source operand 2, and this field is capable of indicating the address of the at least one second vector register storing the second matrix. The 16th to 23th bits [16:23] represent the field of the source operand 3, and this field is capable of indicating the address of at least one third vector register storing a third matrix. The third matrix is an initial matrix of a matrix multiplication-addition operation. For example, for the matrix multiplication-addition operation A*B+C, the first matrix is the matrix A, the second matrix is the matrix B, and the third matrix is the matrix C. The 24th to 31th bits [24:31] are the field of the destination operand, and this field is capable of indicating the address of the destination vector register storing the matrix operation result. It needs to be noted that in some embodiments, the third vector register and the destination vector register may be the same. The 32th to 47th bits [32:47] are the field of the operational code which may include a plurality of specified values. For example, the operational code is 0, indicating performing the multiplication operation, and in this case, the matrix operation instruction is a matrix multiplication instruction. The operational code is 1, indicating performing the multiplication-addition operation, and in this case, the matrix operation instruction is a matrix multiplication-addition instruction.

Table 4

| Field | Bits | Description |
|---|---|---|
| Source Operand 1 | [7:0] | Indicating the address of the at least one first vector register storing the first matrix |
| Source Operand 2 | [15:8] | Indicating the address of the at least one second vector register storing the second matrix |
| Source Operand 3 | [23:16] | Indicating the address of at least one third vector register storing the third matrix |
| Destination Operand | [31:24] | Indicating the address of the destination vector register storing the matrix operation result |
| Operational Code | [47:32] | <table><tr><td>#ID</td><td>Operation</td></tr><tr><td>0</td><td>Multiplication</td></tr><tr><td>1</td><td>Multiplication-addition</td></tr><tr><td></td><td></td></tr></table> |

Referring to Table 5, in the data selection instruction part of the SIMD instruction, the 48th to 52th bits [48:52] are SRC2_SVF_MODE field, and the 53th to 57th bits are SRC1_SVF _MODE field. SRC1_SVF_MODE/SRC2_SVF_MODE having the length of 5 bits may be configured to indicate the replication operation of the data between a plurality of threads. The remaining bits [63:58] are the reserved field of the data selection instruction that may be reserved for subsequently realizing other operations. The number of bits of SRC1_SVF_MODE or SRC2_SVF_MODE is not limited to 5. The number of bits SRC1_SVF_MODE or SRC2_SVF_MODE has may depend on the size of the matrix. It needs to be noted that in Table 5, taking for example that P is 4, i.e., P arithmetic unit groups (described below) are a first arithmetic unit group, a second arithmetic unit group, a third arithmetic unit group, and a fourth arithmetic unit group, respectively, and each arithmetic unit group includes 8 arithmetic units. However, it will be understood that Table 5 is exemplary and the specific meanings of SRC1_SVF_MODE and SRC2_SVF_MODE may be designed according to actual situations, which will not be particularly limited in the present disclosure.

Table 5

| Field | Bits | Description |
|---|---|---|
| SRC2_SV F_ MODE | [52: 48] | Controlling the selection and replication of the second operational data, involved in an operation, in the second matrix. |
| | | 5'd0: replicating the data corresponding to the path 0 of the second vector register to the first arithmetic unit group; replicating the data corresponding to the path 1 of the second vector register to the second arithmetic unit group; replicating the data corresponding to the path 2 of the second vector register to the third arithmetic unit group; and replicating the data corresponding to the path 3 of the second vector register to the fourth arithmetic unit group. |
| | | 5'd1: replicating the data corresponding to the path 4 of the second vector register to the first arithmetic unit group; replicating the data corresponding to the path 5 of the second vector register to the second arithmetic unit group; replicating the data corresponding to the path 6 of the second vector register to the third arithmetic unit group; and replicating the data corresponding to the path 7 of the second vector register to the fourth arithmetic unit group. |
| | | 5' d2: replicating the data corresponding to the path 8 of the second vector register to the first arithmetic unit group; replicating the data corresponding to the path 9 of the second vector register to the second arithmetic unit group; replicating the data corresponding to the path 10 of the second vector register to the third arithmetic unit group; and replicating the data corresponding to the path 11 of the second vector register to the fourth arithmetic unit group. |
| | | 5' d3: replicating the data corresponding to the path 12 of the second vector register to the first arithmetic unit group; replicating the data corresponding to the path 13 of the second vector register to the second arithmetic unit group; replicating the data corresponding to the path 14 of the second vector register to the third arithmetic unit group; and replicating the data corresponding to the path 15 of the second vector register to the fourth arithmetic unit group. |
| SRC1_SV F_ MODE | [57: 53] | Controlling the selection and replication of the first operational data, involved in an operation, in the first matrix. |
| | | 5'd0: correspondingly replicating the data corresponding to the paths 0-7 of the first vector register to the first arithmetic unit group, the second arithmetic unit group, the third arithmetic unit group, and the fourth arithmetic unit group; |
| | | 5'd1: correspondingly replicating the data corresponding to the paths 8-15 of the first vector register to the first arithmetic unit group, the second arithmetic unit group, the third arithmetic unit group, and the fourth arithmetic unit group; |
| | | 5'd2: correspondingly replicating the data corresponding to the paths 16-23 of the first vector register to the first arithmetic unit group, the second arithmetic unit group, the third arithmetic unit group, and the fourth arithmetic unit group; |
| | | 5'd3: correspondingly replicating the data corresponding to the paths 24-31 of the first vector register to the first arithmetic unit group, the second arithmetic unit group, the third arithmetic unit group, and the fourth arithmetic unit group. |
| Reserved Field | [63: 58] | |

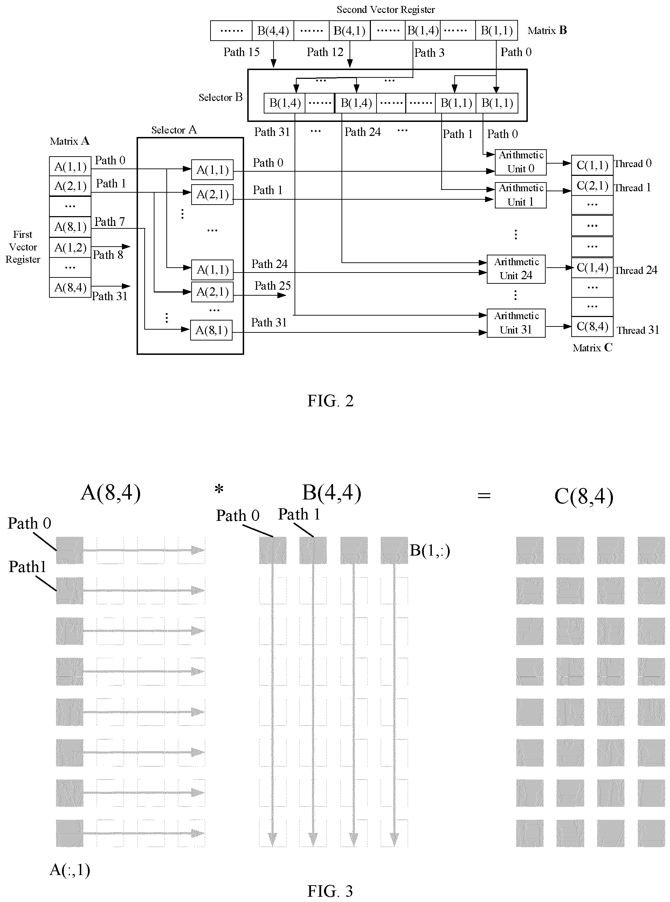

FIG. 2 illustrates a schematic diagram of a correspondence between a thread for performing a matrix operation and a path of a vector register according to an embodiment of the present disclosure.

According to the embodiment of the present disclosure, the matrix operation includes a plurality of threads; the plurality of arithmetic units correspond to the plurality of threads, respectively; each of the plurality of threads corresponds to a corresponding first path of the plurality of first paths and a corresponding second path of the plurality of second paths; the plurality of pieces of first operational data correspond to the plurality of first paths, and the plurality of pieces of second operational data correspond to the plurality of second paths.

As shown in FIG. 2, in some embodiments, the matrix A is one example of the first matrix and the matrix B is one example of the second matrix. The matrix operation includes 32 threads, i.e., thread 0 to thread 31. For example, the thread 0 corresponds to the path 0 (one example of the first path) of the first vector register and the path 0 (one example of the second path) of the second vector register; the thread 1 corresponds to the path 1 of the first vector register and the path 1 of the second vector register, and so on. It needs to be noted that in FIG. 2, the path 0 to the path 31 of the first vector register are represented by arrowed lines pointing from the first vector register to a selector A in FIG. 2, and the path 0 to the path 15 of the second vector register are represented by arrowed lines pointing from the second vector register to a selector B in FIG. 2.

Next, referring back to FIG. 1, in step S103, the selecting at least one piece of first operational data from the plurality of pieces of first operational data based on the first data selection information to obtain at least one piece of first target operational data includes: based on the first data selection information, determining at least one first path selected from the plurality of first paths and taking at least one piece of first operational data corresponding to the at least one first path selected as the at least one piece of first target operational data.

For example, in some embodiments, the first matrix is a column matrix. That is, the data in the same column in the first matrix is continuously stored in an internal memory, and the at least one piece of first target operational data may be located in the same column of the first matrix. For example, all of the first operational data located in the same column of the first matrix is the first target operational data. In this case, selecting at least one piece of first operational data from the plurality of pieces of first operational data to obtain the at least one piece of first target operational data is to select all of the first operational data located in the same column of the first matrix. For example, the first matrix is a matrix of 8*4, and the at least one piece of first target operational data is the first operational data located in the first column or the second column or the third column or the fourth column of the first matrix and the number of the at least one piece of first target operational data is 8.

In the embodiment of the present disclosure, due to the characteristics of the matrix operation, a selection logic for the first operational data in the first matrix and a selection logic for the second operational data in the second matrix are different. For example, for the first matrix, the first operational data may be selected from the same column and the selected first operational data is replicated at the multiple which is equal to the second matrix dimension number of the second matrix. For the second matrix, the second operational data may be selected from the same row and the selected second operational data is replicated at the multiple which is equal to the first matrix dimension number of the first matrix. On hardware implementation, the hardware implementation required for selecting the same column of data of the matrix and the hardware implementation required for selecting the same row of data of the matrix are different. For example, the first data selection information is SRC1_SVF_MODE, and the at least one first path selected may be determined from the plurality of first paths based on a value of SRC1_SVF_MODE. For example, as shown in the above Table 5, when SRC1_SVF_MODE=5'd0, the paths 0-7 of the at least one first vector register are used as the at least one first path selected, and 8 pieces of first operational data corresponding to the paths 0-7 of the first vector register are determined as 8 pieces of first target operational data. The 8 pieces of first target operational data are replicated to the first arithmetic unit group, the second arithmetic unit group, the third arithmetic unit group, and the fourth arithmetic unit group, respectively.

For example, according to the embodiment of the present disclosure, the at least one first vector register includes a first target vector register and the at least one piece of first target operational data is stored in the first target vector register. That is, the at least one piece of first target operational data is stored in the same vector register (i.e., the first target vector register). For example, the above determined 8 pieces of first target operational data are all stored in the first target vector register.

According to the embodiment of the present disclosure, the at least one piece of first target operational data includes M pieces of first target operational data; the plurality of arithmetic units include P arithmetic unit groups and each arithmetic unit group includes M arithmetic units; and the second matrix dimension number of the second matrix is P. For example, P and M are both positive integers. In step S103, the providing the at least one piece of first target operational data at a multiple which is equal to a second matrix dimension number of the second matrix to a plurality of arithmetic units to determine a plurality of first multiplication factors in one-to-one correspondence to the plurality of arithmetic units include: replicating the M pieces of first target operational data for P times to obtain P sets of first target operational data, where each set of first target operational data includes the M pieces of first target operational data; and providing the P sets of first target operational data to the P arithmetic unit groups, respectively, to determine the plurality of first multiplication factors, where M first multiplication factors corresponding to the M arithmetic units of each arithmetic unit group are the M pieces of first target operational data, respectively.

For example, as shown in FIG. 2, if the first matrix is the matrix A of 8*4 and the second matrix is the matrix B of 4*4, the second matrix dimension number of the second matrix is 4 and the at least one piece of first target operational data includes 8 pieces of first target operational data. In this case, M is 8. As shown in FIG. 2, the 8 pieces of first target operational data may be data A(1,1) to A(8,1) of the first column of the matrix A. The plurality of arithmetic units include 4 arithmetic unit groups. In this case, P is 4, and each arithmetic unit group includes 8 arithmetic units. The 8 pieces of first target operational data A(1,1) to A(8,1) are replicated for 4 times to obtain 4 sets of first target operational data, where each set of first target operational data includes 8 pieces of first target operational data A(1, 1) to A(8, 1). The 4 sets of first target operational data are provided to the 4 arithmetic unit groups, respectively, to determine the plurality of first multiplication factors. The plurality of first multiplication factors are 32 pieces of data in the 4 sets of first target operational data. Each arithmetic unit group corresponds to one set of first target operational data. The 8 first multiplication factors corresponding to the 8 arithmetic units of each arithmetic unit group are the 8 pieces of first target operational data A(1, 1) to A(8,1) in the set of first target operational data corresponding thereto.

In step S104, the at least one piece of second operational data is selected from the plurality of pieces of second operational data based on the second data selection information to obtain the at least one piece of second target operational data, and the at least one piece of second target operational data is provided at the multiple which is equal to the first matrix dimension number of the first matrix to determine the plurality of second multiplication factors in one-to-one correspondence to the plurality of arithmetic units.

In step S104, the selecting at least one piece of second operational data from the plurality of pieces of second operational data to obtain at least one piece of second target operational data includes: based on the second data selection information, determining at least one second path selected from the plurality of second paths and taking at least one piece of second operational data corresponding to the at least one second path selected as the at least one piece of second target operational data.

For example, in some embodiments, the second matrix is a row matrix. That is, the data in the same row in the second matrix is continuously stored in an internal memory, and the at least one piece of second target operational data may be located in the same row of the second matrix. For example, all of the second operational data located in the same row of the second matrix is the second target operational data. In this case, selecting at least one piece of second operational data from the plurality of pieces of second operational data to obtain the at least one piece of second target operational data is to select all of the second operational data located in the same row of the second matrix. For example, the second matrix is a matrix of 4*4, and the at least one piece of second target operational data is the second operational data located in the first row or the second row or the third row or the fourth row of the second matrix and the number of the at least one piece of second target operational data is 4.

For example, the second data selection information is SRC2_SVF_MODE, and the at least one second path selected may be determined from the plurality of second paths based on a value of SRC2_SVF_MODE. For example, as shown in the above Table 5, when SRC2_SVF_MODE=5'd0, the paths 0-3 of the at least one second vector register are used as the at least one second path selected, and 4 pieces of second operational data corresponding to the paths 0-3 of the second vector register are determined as 4 pieces of second target operational data, where the second target operational data corresponding to the path 0 of the second vector register is replicated to the first arithmetic unit group; the second target operational data corresponding to the path 1 of the second vector register is replicated to the second arithmetic unit group; the second target operational data corresponding to the path 2 of the second vector register is replicated to the third arithmetic unit group; and the second target operational data corresponding to the path 3 of the second vector register is replicated to the fourth arithmetic unit group.

For example, according to the embodiment of the present disclosure, the at least one second vector register includes a second target vector register and the at least one piece of second target operational data is stored in the second target vector register. That is, the at least one piece of second target operational data is stored in the same vector register (i.e., the second target vector register). For example, the above determined 4 pieces of second target operational data are all stored in the second target vector register.

According to the embodiment of the present disclosure, the at least one piece of second target operational data includes P pieces of second target operational data; the plurality of arithmetic units include P arithmetic unit groups and each arithmetic unit group includes M arithmetic units; the first matrix dimension number of the first matrix is M; and M and P are both positive integers. In step S104, the providing the at least one piece of second target operational data at a multiple which is equal to a first matrix dimension number of the first matrix to the plurality of arithmetic units to determine a plurality of first multiplication factors in one-to-one correspondence to the plurality of arithmetic units include: replicating the P pieces of second target operational data for M times to obtain P sets of second target operational data, where each set of second target operational data corresponds to one piece of second target operational data and includes M pieces of same second target operational data; and providing the P sets of second target operational data to the P arithmetic unit groups, respectively, to determine the plurality of second multiplication factors, where M second multiplication factors corresponding to the M arithmetic units of each arithmetic unit group are the same and are the second target operational data in the set of second target operational data corresponding to the arithmetic unit group.

For example, as shown in FIG. 2, in the case of the first matrix being the matrix A of 8*4 and the second matrix being the matrix B of 4*4, the first matrix dimension number of the first matrix is 8 and the at least one piece of second target operational data includes 4 pieces of second target operational data. As shown in FIG. 2, the 4 pieces of second target operational data may be data B(1,1) to B(1,4) of the first row of the matrix B. The plurality of arithmetic units include 4 arithmetic unit groups, and each arithmetic unit group includes 8 arithmetic units. The 4 pieces of second target operational data B(1,1) to B(1,4) are replicated for 8 times, respectively, to obtain 4 sets of second target operational data, where each set of second target operational data corresponds to one piece of second target operational data and includes 8 pieces of same second target operational data. The 4 sets of second target operational data are provided to the 4 arithmetic unit groups, respectively, to determine the plurality of second multiplication factors. The plurality of second multiplication factors are 32 pieces of data in the 4 sets of second target operational data. Each arithmetic unit group corresponds to one set of second target operational data. The 8 second multiplication factors corresponding to the 8 arithmetic units of each arithmetic unit group are the same and are the second target operational data in the set of first target operational data corresponding to each arithmetic unit group.

For example, as shown in FIG. 2, the path 0 to the path 31 corresponding to the selector A (the path 0 to the path 31 corresponding to the selector A are represented by the arrowed lines pointing from the selector A to the arithmetic units in FIG. 2) correspond to the thread 0 to the thread 31, respectively, and the path 0 to the path 31 corresponding to the selector B (the path 0 to the path 31 corresponding to the selector B are represented by the arrowed lines pointing from the selector B to the arithmetic units in FIG. 2) also correspond to the thread 0 to the thread 31, respectively. The path 0 to the path 7 of the first vector register corresponding to the thread 0 to the thread 7 correspond to the 8 pieces of first operational data A(1,1), A(2,1), ..., A(8,1) of the column vector A(:,1) in the matrix A. In some examples, the 8 pieces of first operational data A(1,1), A(2,1), ..., A(8,1) of the column vector A(:,1) in the matrix A are used as the first target operational data. By replicating the first operational data A(1,1), A(2,1), ..., A(8,1) corresponding to the path 0 to the path 7 of the first vector register to the path 0 to the path 7 corresponding to the selector A, the path 8 to the path 15 corresponding to the selector A, the path 16 to the path 23 corresponding to the selector A, and the path 24 to the path 31 corresponding to the selector A, respectively, the data corresponding to the thread 0 to the thread 7 is A(1,1), A(2,1), ..., A(8,1), respectively; the data corresponding to the thread 8 to the thread 15 is A(1,1), A(2,1), ..., A(8,1), respectively; the data corresponding to the thread 16 to the thread 23 is A(1,1), A(2,1), ..., A(8,1), respectively; and the data corresponding to the thread 24 to the thread 31 is A(1,1), A(2,1), ..., A(8,1), respectively. The data transmitted by the paths corresponding to the selector A is the first multiplication factors described above. The path 0 to the path 3 of the second vector register corresponding to the thread 0 to the thread 3 correspond to the 4 pieces of second operational data B(1,1), B(1,2), B(1,3), and B(1,4) of the row vector B(1,:) in the matrix B. In some examples, the 4 pieces of second operational data B(1,1), B(1,2), B(1,3), and B(1,4) of the row vector B(1,:) in the matrix B are used as the second target operational data. By replicating the second operational data B(1,1) corresponding to the path 0 of the second vector register to the path 0 to the path 7 corresponding to the selector B, replicating the second operational data B(1,2) corresponding to the path 1 of the second vector register to the path 8 to the path 15 corresponding to the selector B, replicating the second operational data B(1,3) corresponding to the path 2 of the second vector register to the path 16 to the path 23 corresponding to the selector B, and replicating the second operational data B(1,4) corresponding to the path 3 of the second vector register to the path 24 to the path 31 corresponding to the selector B, the data corresponding to the thread 0 to the thread 7 is B(1,1), the data corresponding to the thread 8 to the thread 15 is B(1,2), the data corresponding to the thread 16 to the thread 23 is B(1,3), and the data corresponding to the thread 24 to the thread 31 is B(1,4). The data transmitted by the paths corresponding to the selector B is the second multiplication factors described above. The data replication operation in the matrix operation is described above by taking the first column of the matrix A and the first row of the matrix B for example, and other columns of the matrix A and other rows of the matrix B are similar to this example, which will not be described here redundantly.

In addition to steps S101 to S104, as shown in FIG. 1, the data processing method provided in the embodiment of the present disclosure further includes steps S105 to S107.

Step S105: determining at least one destination vector register.

For example, a matrix operation instruction may be obtained from a memory (e.g., a DDR) and parsed to obtain an address of the at least one destination vector register, and the at least one destination vector register may be determined based on the address of the at least one destination vector register.

Step S106: performing a multiplication operation by the plurality of arithmetic units based on the plurality of first multiplication factors and the plurality of second multiplication factors to obtain a plurality of multiplication operation results corresponding to the plurality of arithmetic units, where each arithmetic unit is configured to perform the multiplication operation on a first multiplication factor and a second multiplication factor corresponding to each arithmetic unit to obtain a multiplication operation result corresponding to each arithmetic unit.

For example, the first matrix is a matrix of 8*4 and the second matrix is a matrix of 4*4. According to step S103 and step S104, the plurality of first multiplication factors and the plurality of second multiplication factors are determined. In this embodiment, the first target operational data is the 8 pieces of first operational data located in the same column of the first matrix, and the second target operational data is the 4 pieces of second operational data located in the same row of the second matrix. The 8 pieces of first target operational data are replicated at the multiple which is equal to the second matrix dimension number (i.e., 4) of the second matrix to obtain 32 first multiplication factors. The 32 first multiplication factors are provided to 32 arithmetic units, respectively, and the 32 first multiplication factors are in one-to-one correspondence to the 32 arithmetic units. The 4 pieces of second target operational data are replicated at the multiple which is equal to the first matrix dimension number (i.e., 8) of the first matrix to obtain 32 second multiplication factors. The 32 second multiplication factors are provided to 32 arithmetic units, respectively, and the 32 second multiplication factors are in one-to-one correspondence to the 32 arithmetic units. Each arithmetic unit corresponds to one first multiplication factor and one second multiplication factor and performs the multiplication operation on the first multiplication factor and the second multiplication factor to obtain the multiplication operation result.

For example, as shown in FIG. 2, for the matrix multiplication A*B=C, the first matrix is the matrix A of 8*4 and the second matrix is the matrix B of 4*4. Correspondingly, the resulting matrix C is a matrix of 8*4. The plurality of arithmetic units include arithmetic unit 0 to arithmetic unit 31 (only the arithmetic unit 0, the arithmetic unit 1, the arithmetic unit 24, and the arithmetic unit 31 are illustrated in FIG. 2), and each arithmetic unit includes a multiplier to perform the multiplication operation. The arithmetic unit 0 corresponds to the path 0 of the selector A and the path 0 of the selector B. The arithmetic unit 0 is configured to perform the multiplication operation on the first multiplication factor transmitted by the path 0 of the selector A and the second multiplication factor transmitted by the path 0 of the selector B to obtain the multiplication operation result C(1,1) corresponding to the arithmetic unit 0. The arithmetic unit 1 corresponds to the path 1 of the selector A and the path 1 of the selector B. The arithmetic unit 1 is configured to perform the multiplication operation on the first multiplication factor transmitted by the path 1 of the selector A and the second multiplication factor transmitted by the path 1 of the selector B to obtain the multiplication operation result C(2,1) corresponding to the arithmetic unit 1. FIG. 2 further illustrates the multiplication operation result C(1,4) corresponding to the arithmetic unit 24 in the resulting matrix C and the multiplication operation result C(8,4) corresponding to the arithmetic unit 31 in the resulting matrix C.

According to the embodiment of the present disclosure, the plurality of arithmetic units concurrently perform the multiplication operation. For example, 32 arithmetic units concurrently perform the multiplication operation.

Step S107: transmitting the plurality of multiplication operation results to the at least one destination vector register.

For example, the at least one destination vector register is configured to store the plurality of multiplication operation results.

According to the embodiment of the present disclosure, step S107 includes: performing an addition operation on the plurality of multiplication operation results and a plurality of pieces of storage data stored in the at least one destination vector register, in one-to-one correspondence, to obtain a plurality of addition operation results; and storing the plurality of addition operation results in the at least one destination vector register.

For example, the first matrix is a matrix of 8*4 and the second matrix is a matrix of 4*4. The first matrix and the second matrix are multiplied to obtain a resulting matrix. The resulting matrix is a matrix of 8*4. The 8 pieces of data of the first column of the first matrix are each multiplied by the first piece of data of the first row of the second matrix to obtain a set of 8 multiplication operation results, and the 8 pieces of data of the first column of the first matrix are each multiplied by the second piece of data of the first row of the second matrix to obtain a set of 8 multiplication operation results, and so on. The first column of the first matrix is multiplied by the first row of the second matrix to obtain 4 sets of multiplication operation results. Each set of multiplication operation results includes 8 multiplication operation results. The four sets of multiplication operation results (a total of 32 multiplication operation results) are transmitted to a destination vector register and stored as storage data in the destination vector register. Next, 32 multiplication operation results obtained by multiplying the second column of the first matrix by the second row of the second matrix are transmitted to a destination vector register and subjected to the addition operation with 32 pieces of storage data (e.g., the 32 multiplication operation results obtained by multiplying the first column of the first matrix by the first row of the second matrix) previously stored in the destination vector register, in one-to-one correspondence, to obtain 32 addition operation results. The 32 addition operation results are stored as updated 32 pieces of storage data in the destination vector register. Similarly, 32 multiplication operation results obtained by multiplying the fourth column of the first matrix by the fourth row of the second matrix are transmitted to the destination vector register and subjected to the addition operation with 32 pieces of storage data previously stored, in one-to-one correspondence, to obtain 32 addition operation results. The 32 addition operation results are stored as final results in the destination vector register. It needs to be noted that the order of transmitting the multiplication operation results obtained by multiplying a column of the first matrix by a row of the second matrix to the destination vector register is not unique. For example, the multiplication operation results obtained by multiplying the first column of the first matrix by the first row of the second matrix may be first transmitted to the destination vector register or last transmitted to the destination vector register.

For example, at least one first data reading instruction may be used to read the first operational data of the first matrix from a memory (e.g., an internal memory) and write the first operational data in the at least one first vector register, and at least one second data reading instruction may be used to read the second operational data of the second matrix from the memory and write the second operational data in the at least one second vector register

For the reading and writing of the first operational data and the reading and writing of the second operational data, the data processing method provided in the embodiment of the present disclosure further includes the following steps: obtaining at least one first data reading instruction and at least one second data reading instruction; parsing the at least one first data reading instruction to obtain at least one read address and at least one first address; reading the plurality of pieces of first operational data from a memory based on the at least one first read address, and based on the at least one first address, determining the at least one first vector register and writing the plurality of pieces of first operational data in the at least one first vector register; parsing the at least one second data reading instruction to obtain at least one second read address and at least one second address; and reading the plurality of pieces of second operational data from the memory based on the at least one second read address, and based on the at least one second address, determining the at least one second vector register and writing the plurality of pieces of second operational data in the at least one second vector register.

For example, the first data reading instruction and the second data reading instruction may be obtained from the memory (e.g., a DDR). The first data reading instruction includes the first read address and the first address, and the second data reading instruction includes the second read address and the second address. The first read address indicates the storage position of the first operational data on the memory and the second read address indicates the storage position of the second operational data on the memory. The first operational data and the second operational data may be read from the memory based on the first read address and the second read address. The first address indicates the address of the first vector register used for storing the first operational data and the second address indicates the address of the second vector register used for storing the second operational data. Based on the first address and the second address, the first vector register and the second vector register may be determined, and the first operational data is written in the first vector register and the second operational data is written in the second vector register.

First, the whole first matrix is read into the first vector register through one step and the whole second matrix is read into the second vector register through one step. Next, a first path is selected from the plurality of first paths of the first vector register and a second path is selected from the plurality of second paths of the second vector register, and the operational data corresponding to the selected first path and the operational data corresponding to the selected second path are replicated to participate in the multiplication operation of a corresponding thread. Matrix characteristics are fully utilized and data is effectively reused between threads to reduce the data redundancy between the threads, thereby greatly reducing the times of reading data and reducing the power consumption.

FIG. 3 illustrates a schematic diagram of one example of data processing of a matrix operation according to an embodiment of the present disclosure.

As shown in FIG. 3, the SIMD example in the present embodiment is the SIMD 32 structure. Each first vector register includes 32 first paths and each second vector register includes 32 second paths. With this structure, the matrix multiplication A*B=C is performed, where the first matrix is the matrix A of 8*4 and the second matrix is the matrix B of 4*4. Correspondingly, the resulting matrix C is a matrix of 8*4. An involved universal matrix algorithm for hardware is as follows:

$$\sum_{i=1}^{4} A(:,i) * B(i,:) = C$$

Specific operations in the present embodiment are as follows:

The first vector register has 32 first paths. As shown in FIG. 2, the path 0 to the path 7 of the first vector register correspond to the 8 pieces of data A(1,1), A(2,1), ..., A(8,1) of the column vector A(:,1) of the matrix A; the path 8 to the path 15 of the first vector register correspond to the 8 pieces of data A(1,2), A(2,2), ..., A(8,2) of the column vector A(:,2) of the matrix A; the path 16 to the path 23 of the first vector register correspond to the 8 pieces of data A(1,3), A(2,3), ..., A(8,3) of the column vector A(:,3) of the matrix A; and the path 24 to the path 31 of the first vector register correspond to the 8 pieces of data A(1,4), A(2,4), ..., A(8,4) of the column vector A(:,4) of the matrix A. The second vector register has 32 second paths. As shown in FIG. 2, the path 0 to the path 3 of the second vector register correspond to the 4 pieces of data B(1,1), B(1,2), B(1,3), and B(1,4) of the row vector B(1,:) of the matrix B; the path 4 to the path 7 (not shown in FIG. 2) of the second vector register correspond to the 4 pieces of data B(2,1), B(2,2), B(2,3), and B(2,4) of the row vector B(2,:) of the matrix B; the path 8 to the path 11 (not shown in FIG. 2) of the second vector register correspond to the 4 pieces of data B(3,1), B(3,2), B(3,3), and B(3,4) of the row vector B(3,:) of the matrix B; and the path 12 to the path 15 of the second vector register correspond to the 4 pieces of data B(4,1), B(4,2), B(4,3), and B(4,4) of the row vector B(4,:) of the matrix B. It needs to be noted that FIG. 2 only illustrates the path 0 to the path 15 of the second vector register. The remaining 16 paths of the second vector register (the path 16 to the path 31 of the second vector register) are not shown, but do not represent that they do not exist, and the data corresponding to the remaining 16 paths of the second vector register is set according to actual situations.

Referring to Table 5, when SRC1_SVF_MODE=5'd0, the first operational data A(1,1), A(2,1), ..., A(8,1) is correspondingly replicated as the first target operational data to the paths 0-7, the paths 8-15, the paths 16-23, and the paths 24-31 corresponding to the selector A (this process is represented by a solid arrow in FIG. 3). The 8 pieces of first target operational data are replicated at the multiple which is equal to the second matrix dimension number 4 of the matrix B, i.e., for 4 times. When SRC1_SVF_MODE=5'd1, A(1,2), A(2,2), ..., A(8,2) are correspondingly replicated to the paths 0-7, the paths 8-15, the paths 16-23, and the paths 24-31 corresponding to the selector A. When SRC1_SVF_MODE=5'd2, A(1,3), A(2,3), ..., A(8,3) are correspondingly replicated to the paths 0-7, the paths 8-15, the paths 16-23, and the paths 24-31 corresponding to the selector A. When SRC1_SVF_MODE=5'd3, A(1,4), A(2,4), ..., A(8,4) are correspondingly replicated to the paths 0-7, the paths 8-15, the paths 16-23, and the paths 24-31 corresponding to the selector A.

When SRC2_SVF_MODE=5'd0, the second operational data B(1,1) is replicated to the paths 0-7 corresponding to the selector B; the second operational data B(1,2) is replicated to the paths 8-15 corresponding to the selector B; the second operational data B(1,3) is replicated to the paths 16-23 corresponding to the selector B; and the second operational data B(1,4) is replicated to the paths 24-31 corresponding to the selector B (this process is represented by a solid arrow in FIG. 3). When SRC2_SVF_MODE=5'd1, the second operational data B(2,1), B(2,2), B(2,3), and B(2,4) is replicated to the paths 0-7, the paths 8-15, the paths 16-23, and the paths 24-31 corresponding to the selector B, respectively. When SRC2_SVF_MODE=5'd2, the second operational data B(3,1), B(3,2), B(3,3), and B(3,4) is replicated to the paths 0-7, the paths 8-15, the paths 16-23, and the paths 24-31 corresponding to the selector B, respectively. When SRC2_SVF_MODE=5'd3, the second operational data B(4,1), B(4,2), B(4,3), and B(4,4) is replicated to the paths 0-7, the paths 8-15, the paths 16-23, and the paths 24-31 corresponding to the selector B, respectively.

When SRC1_SVF_MODE=5'd0 and SRC2_SVF_MODE=5'd0, the data corresponding to the 32 first paths of the first target vector register and the data corresponding to the 32 second paths of the second target vector register are multiplied correspondingly to obtain the column vector C(:,1) of the matrix C. similarly, when SRC1_SVF_MODE=5'd1 and SRC2_SVF_MODE=5'd1, the column vector C(:,2) of the matrix C is obtained; when SRC1_SVF_MODE=5'd2 and SRC2_SVF_MODE=5'd2, the column vector C(:,3) of the matrix C is obtained; and when SRC1_SVF_MODE=5'd3 and SRC2_SVF_MODE=5'd3, the column vector C(:,4) of the matrix C is obtained.

The specific operations of the data processing process for a matrix operation according to an embodiment of the present disclosure are specifically described below. For example, the matrix operation is used for performing an operation on a first matrix and a second matrix.

Firstly, the first matrix for the matrix operation is read into at least one first vector register and the second matrix for the matrix operation is read into at least one second vector register. Then, at least one piece of first operational data is selected from a plurality of pieces of first operational data stored in the at least one first vector register based on first data selection information to obtain at least one piece of first target operational data, and at least one piece of second operational data is selected from a plurality of pieces of second operational data stored in the at least one second vector register based on second data selection information to obtain at least one piece of second target operational data. Next, the at least one piece of first target operational data is provided at a multiple which is equal to a second matrix dimension number of the second matrix to a plurality of arithmetic units to determine a plurality of first multiplication factors in one-to-one correspondence to the plurality of arithmetic units. The at least one piece of second target operational data is provided at a multiple which is equal to a first matrix dimension number of the first matrix to the plurality of arithmetic units to determine a plurality of second multiplication factors in one-to-one correspondence to the plurality of arithmetic units. Finally, the plurality of arithmetic units perform a multiplication operation on the plurality of first multiplication factors and the plurality of second multiplication factors to realize the matrix operation. In the above data processing process, the times of performing data reading and storage can be reduced. For example, the times of performing data reading and storage may be reduced to one, and the matrix operation on the first matrix and the second matrix can be completed through by reading data once. For example, examples of part of assembly instructions of the above matrix operation may be represented as follows:

```
vec_load_b32 v0, v_addr_0;
vec_load_b32 v80, v_addr_1;
vec_mul_u32 v100, v0, v80, SRC1_SVF_MODE = 5'd0, SRC2_SVF_MODE = 5'd0;
vec_mul_u32 v101, v0, v80, SRC1_SVF_MODE = 5'd1, SRC2_SVF_MODE = 5'd1;
vec_mul_u32 v102, v0, v80, SRC1_SVF_MODE = 5'd2, SRC2_SVF_MODE = 5'd2;
vec_mul_u32 v103, v0, v80, SRC1_SVF_MODE = 5'd3, SRC2_SVF_MODE = 5'd3;
```

Specifically, in the above assembly instructions, firstly, the matrix A is read from a memory (address v_addr_0) into the first vector register v0 by one vec_load_b32 instruction and the matrix B is read from a memory (address v_addr_1) into the second vector register v80 by one vec_load_b32 instruction. Both of the first vector register v0 and the second vector register v80 can store 32 pieces of data.

Next, the matrix operation is performed on the data in the first vector register v0 and the second vector register v80. Specifically, for the instruction "vec_mul_u32 v100, v0, v80, SRC1_SVF_MODE = 5'd0, SRC2_SVF_MODE = 5'd0", vec_mul_u32 is the operational code, indicating the 32-bit multiplication operation, where v0 indicates the address of the first vector register storing the first matrix A; v80 indicates the address of the second vector register storing the second matrix B; the first target operational data in the first matrix A and the second target operational data in the first matrix B are selected by setting values of SRC1_SVF_MODE and SRC2_SVF_MODE; and v100/v101/v102/v103 indicates the address of the destination vector register storing the multiplication operation result. Thus, the matrix operation based on a single reading operation of the matrices with the SIMD structure is realized.

It will be understood that the SIMD structure and the matrices involved in the multiplication operation are not limited to the above example and can be adjusted by a person skilled in the art according to actual situations, which will not be enumerated here one by one.

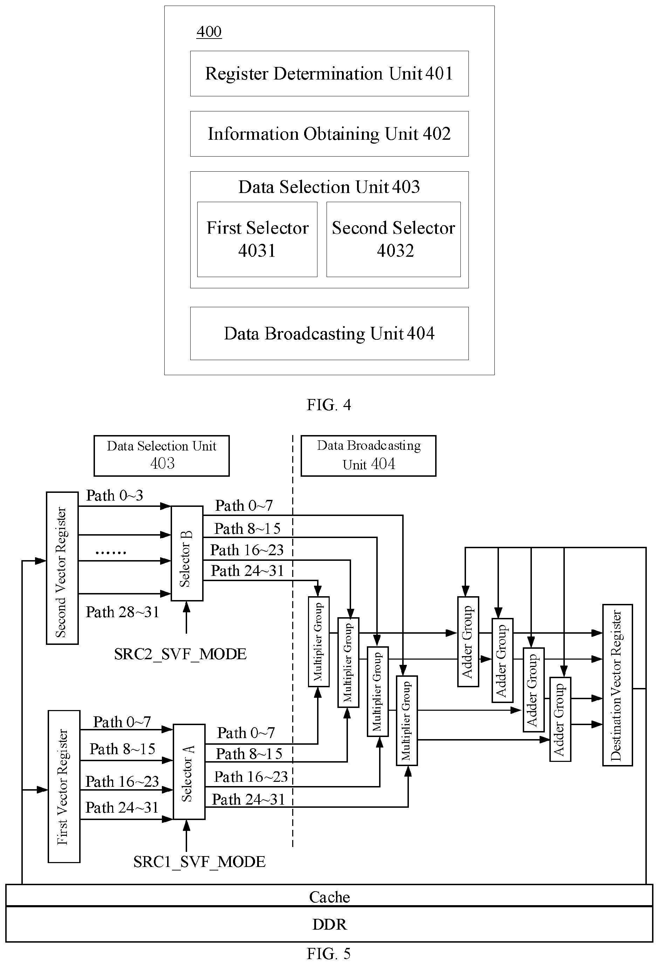

FIG. 4 illustrates a schematic block diagram of one example of a data processing apparatus 400 applied to a matrix operation according to an embodiment of the present disclosure.

As shown in FIG. 4, the data processing apparatus 400 applied to a matrix operation according to an embodiment of the present disclosure may include: a register determination unit 401, an information obtaining unit 402, a data selection unit 403, and a data broadcasting unit 404.

The register determination unit 401 may be configured to determine at least one first vector register storing a first matrix and at least one second vector register storing a second matrix, where the first matrix includes a plurality of pieces of first operational data, and the second matrix includes a plurality of pieces of second operational data. For example, the register determination unit 401 may obtain a matrix operation instruction from a memory (e.g., a DDR) and parse the matrix operation instruction to obtain at least one first address indicating the at least one first vector register and at least one second address indicating the at least one second vector register, thereby determining the at least one first vector register and the at least one second vector register based on the at least one first address and the at least one second address.

The information obtaining unit 402 may be configured to obtain first data selection information and second data selection information. For example, the information obtaining unit 402 may obtain a data selection instruction from the memory (e.g., the DDR). The data selection instruction includes the first data selection information and the second data selection information. The information obtaining unit 402 is configured to obtain the first data selection information and the second data selection information by parsing the data selection instruction.

The data selection unit 403 may be configured to select at least one piece of first operational data from the plurality of pieces of first operational data based on the first data selection information to obtain at least one piece of first target operational data and select at least one piece of second operational data from the plurality of pieces of second operational data based on the second data selection information to obtain at least one piece of second target operational data. For example, the data selection unit 403 may include a first selector 4031 and a second selector 4032. The first selector 4031 is configured to select the at least one piece of first operational data from the at least one piece of first operational data of the first matrix based on the first data selection information (e.g., SRC1_SVF_MODE) to obtain the at least one piece of first target operational data, and the second selector 4032 is configured to select the at least one piece of second operational data from the at least one piece of second operational data based on the second data selection information (e.g., SRC2_SVF_MODE) to obtain the at least one piece of second target operational data.

For example, both of the first selector 4031 and the second selector 4032 are one-out-of-multiple selectors. In the example shown in FIG. 5, the first selector 4031 may be the above-mentioned selector A which may be an 8-out-of-32 selector; and the second selector 4032 may be the above-mentioned selector B which may be a 4-out-of-32 selector.

The data broadcasting unit 404 may be configured to provide the at least one piece of first target operational data at a multiple which is equal to a second matrix dimension number of the second matrix to a plurality of arithmetic units to determine a plurality of first multiplication factors in one-to-one correspondence to the plurality of arithmetic units, and provide the at least one piece of second target operational data at a multiple which is equal to a first matrix dimension number of the first matrix to the plurality of arithmetic units to determine a plurality of second multiplication factors in one-to-one correspondence to the plurality of arithmetic units, where the first matrix dimension number and the second matrix dimension number are both positive integers, and a type of the first matrix dimension number is different from a type of the second matrix dimension number.

FIG. 5 illustrates a working schematic diagram of an example data selection unit 403 and data broadcasting unit 404 involved in the latter part of data processing according to an embodiment of the present disclosure.

As shown in FIG. 5, the first vector register has 32 paths (the path 0 to the path 31 corresponding to the first vector register), and 32 pieces of first operational data of matrix A correspond to the 32 paths of the first vector register. The second vector register has 32 paths (the path 0 to the path 31 corresponding to the second vector register), and 16 pieces of second operational data of matrix B correspond to the first 16 paths of the second vector register. The data selection unit 403 is configured to, based on the first data selection information SRC1_SVF_MODE and the second data selection information SRC2_SVF_MODE received from the information obtaining unit 402, on the 32 paths of the first vector register, select 8 pieces of first target operational data from the 32 pieces of first operational data of the matrix A (one example of the first matrix of the present disclosure) by means of the 8-out-of 32 selector A and on the 32 paths of the second vector register, select 4 pieces of second target operational data from the 16 pieces of second operational data of the matrix B (one example of the second matrix of the present disclosure) by means of the 4-out-of 32 selector B. Subsequently, the data broadcasting unit 404 is configured to correspondingly replicate the 8 pieces of first target operational data to the paths 0-7, the paths 8-15, the paths 16-23, and the paths 24-31 corresponding to the selector A at the multiple which is equal to the second matrix dimensional number 4 of the matrix B, and then provide the data transmitted by the 32 paths of the selector A to 4 multiplier groups (each multiplier group includes 8 multipliers). The data transmitted by the paths corresponding to the selector A is the above-mentioned first multiplication factors in one-to-one correspondence to the 32 multipliers. The data broadcasting unit 404 is further configured to correspondingly replicate the 4 pieces of second target operational data to the paths 0-7, the paths 8-15, the paths 16-23, and the paths 24-31 corresponding to the selector B at the multiple which is equal to the first matrix dimensional number 8 of the matrix A, and then provide the data transmitted by the 32 paths of the selector B to the 4 multiplier groups. The data transmitted by the paths corresponding to the selector B is the above-mentioned second multiplication factors in one-to-one correspondence to the 32 multipliers. The first multiplication factors and the second multiplication factors are subjected to the matrix multiplication operation in the multipliers to obtain 4 sets of multiplication operation results. Each set of multiplication operation results includes 8 multiplication operation results. The four sets of multiplication operation results (a total of 32 multiplication operation results) are transmitted to four adder groups (each adder group includes 8 adders), respectively, to realize the addition operation. The 8 multiplication operation results in each set of multiplication operation results are correspondingly transmitted to the 8 adders in one adder group to serve as one addition factor. The four sets of multiplication operation results are each added with the corresponding storage data (the other addition factor of the adder) in the destination vector register to obtain a plurality of addition operation results; and the plurality of addition operation results are stored as updated storage data in the at least one destination vector register.

For example, the register determination unit 401, the information obtaining unit 402, the data selection unit 403, and the data broadcasting unit 404 may be implemented by using hardware, software, firmware, and any feasible combination thereof.

For example, when performing the step of determining the at least one first vector register storing the first matrix and the at least one second vector register storing the second matrix, the register determination unit 401 may be configured to obtain at least one first address and at least one second address, determine the at least one first vector register based on the at least one first address, and determine the at least one second vector register based on the at least one second address.

For example, when performing the step of obtaining the at least one first address and the at least one second address, the register determination unit 401 may be configured to obtain a matrix operation instruction, and parse the matrix operation instruction to obtain the at least one first address and the at least one second address.

For example, in some embodiments, when performing the step of obtaining the first data selection information and the second data selection information, the information obtaining unit 402 may be further configured to parse the matrix operation instruction to obtain the first data selection information and the second data selection information.

For example, in some other embodiments, when performing the step of obtaining the first data selection information and the second data selection information, the information obtaining unit 402 may be configured to obtain a data selection instruction and parse the data selection instruction to obtain the first data selection information and the second data selection information.

For example, in some embodiments, the data processing apparatus 400 further includes a data reading and writing unit. The data reading and writing unit may be configured to: obtain at least one first data reading instruction and at least one second data reading instruction; parse the at least one first data reading instruction to obtain at least one read address and at least one first address; read the plurality of pieces of first operational data from a memory based on the at least one first read address, and based on the at least one first address, determine the at least one first vector register and write the plurality of pieces of first operational data in the at least one first vector register; parse the at least one second data reading instruction to obtain at least one second read address and at least one second address; and read the plurality of pieces of second operational data from the memory based on the at least one second read address, and based on the at least one second address, determine the at least one second vector register and write the plurality of pieces of second operational data in the at least one second vector register.

For example, the matrix operation includes a plurality of threads; the plurality of arithmetic units correspond to the plurality of threads, respectively; the at least one first vector register has a plurality of first paths; the at least one second vector register has a plurality of second paths; each of the plurality of threads corresponds to a corresponding first path of the plurality of first paths and a corresponding second path of the plurality of second paths; the plurality of pieces of first operational data correspond to the plurality of first paths, and the plurality of pieces of second operational data correspond to the plurality of second paths. When performing the step of selecting at least one piece of first operational data from the plurality of pieces of first operational data based on the first data selection information to obtain at least one piece of first target operational data, the data selection unit 403 may be configured to, based on the first data selection information, determine at least one first path selected from the plurality of first paths and take at least one piece of first operational data corresponding to the at least one first path selected as the at least one piece of first target operational data. When performing the step of selecting at least one piece of second operational data from the plurality of pieces of second operational data based on the second data selection information to obtain at least one piece of second target operational data, the data selection unit 403 may be configured to, based on the second data selection information, determine at least one second path selected from the plurality of second paths and take at least one piece of second operational data corresponding to the at least one second path selected as the at least one piece of second target operational data.

For example, in some embodiments, the data processing apparatus 400 further includes a data operating and writing unit. The data operating and writing unit may be configured to: determine at least one destination vector register; perform a multiplication operation by the plurality of arithmetic units based on the plurality of first multiplication factors and the plurality of second multiplication factors to obtain a plurality of multiplication operation results corresponding to the plurality of arithmetic units, where each arithmetic unit is configured to perform the multiplication operation on the first multiplication factor and the second multiplication factor corresponding thereto to obtain the multiplication operation result corresponding to the arithmetic unit; and transmit the plurality of multiplication operation results to the at least one destination vector register.

For example, when performing the step of transmitting the plurality of multiplication operation results to the at least one destination vector register, the data operating and writing unit may be configured to perform an addition operation on the plurality of multiplication operation results and a plurality of pieces of storage data stored in the at least one destination vector register in one-to-one correspondence to obtain a plurality of addition operation results; and store the plurality of addition operation results in the at least one destination vector register.

For example, the at least one piece of first target operational data includes M pieces of first target operational data; the plurality of arithmetic units include P arithmetic unit groups and each arithmetic unit group includes M arithmetic units; the second matrix dimension number is P; and M and P are both positive integers. When performing the step of providing the at least one piece of first target operational data at the multiple which is equal to the second matrix dimension number of the second matrix to the plurality of arithmetic units to determine the plurality of first multiplication factors in one-to-one correspondence to the plurality of arithmetic units, the data broadcasting unit 404 may be configured to: replicate the M pieces of first target operational data for P times to obtain P sets of first target operational data, where each set of first target operational data includes the M pieces of first target operational data; and provide the P sets of first target operational data to the P arithmetic unit groups, respectively, to determine the plurality of first multiplication factors, where M first multiplication factors corresponding to the M arithmetic units of each arithmetic unit group are the M pieces of first target operational data, respectively.

For example, the at least one piece of second target operational data includes P pieces of second target operational data; the plurality of arithmetic units include P arithmetic unit groups and each arithmetic unit group includes M arithmetic units; the first matrix dimension number is M; M and P are both positive integers. When performing the step of providing the at least one piece of second target operational data at the multiple which is equal to the first matrix dimension number of the first matrix to the plurality of arithmetic units to determine the plurality of second multiplication factors in one-to-one correspondence to the plurality of arithmetic units, the data broadcasting unit 404 may be configured to: replicate the P pieces of second target operational data for M times to obtain P sets of second target operational data, where each set of second target operational data corresponds to one piece of second target operational data and includes M pieces of same second target operational data; and provide the P sets of second target operational data to the P arithmetic unit groups, respectively, to determine the plurality of second multiplication factors, where M second multiplication factors corresponding to the M arithmetic units of each arithmetic unit group are the same and are the second target operational data in the set of second target operational data corresponding to the arithmetic unit group.

For example, the plurality of arithmetic units concurrently perform the multiplication operation.

For example, the at least one first vector register includes a first target vector register and the at least one piece of first target operational data is stored in the first target vector register. The at least one second vector register includes a second target vector register and the at least one piece of second target operational data is stored in the second target vector register.

For example, the first matrix is a matrix column, and the at least one piece of first target operational data is located in the same column of the first matrix; and the second column is a row column, and the at least one piece of second target operational data is located in the same row of the second matrix.

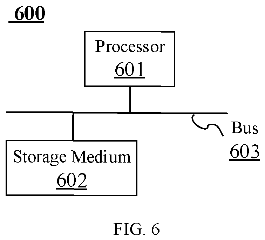

FIG. 6 illustrates a schematic diagram of a data processing device 600 according to an embodiment of the present disclosure.

As shown in FIG. 6, the data processing device 600 according to the embodiment of the present disclosure may include a processor 601 and a storage medium 602 that may be interconnected by a bus 603.

The processor 601 may perform various actions and various kinds of processing according to a program or code stored in the storage medium 602. Specifically, the processor 601 may be an integrated circuit chip capable of signal processing. The processor may be a general-purpose processor, a digital signal processor (DSP), an application-specific integrated circuit (ASIC), a field-programmable gate array (FPGA), another programmable logic device, a discrete gate or transistor logic device, or a discrete hardware component. The processor can implement or execute the methods, steps, flows, and logical block diagrams disclosed in the embodiments of the present disclosure. The general-purpose processor may be a microprocessor, or the processor may be any conventional processor, etc., and may be an X86 framework, an ARM framework, or the like.

The storage medium 602 stores computer-executable instructions, where the computer-executable instructions, when executed by the processor 601, implement the data processing method provided in at least one embodiment of the present disclosure. The storage medium 602 may be a volatile memory or a non-volatile memory, or may include both of the volatile and non-volatile memories. The non-volatile memory may be a read only memory (ROM), a programmable read-only memory (PROM), an erasable programmable read-only memory (EPROM), an electrically erasable programmable read-only memory (EEPROM), or a flash. The volatile memory may be a random-access memory (RAM) which serves as an external cache. By exemplary but non-limiting description, many forms of RAMs may be used, such as a static random-access memory (SRAM), a dynamic random-access memory (DRAM), a synchronous dynamic random-access memory (SDRAM), a double-data-rate synchronous dynamic random-access memory (DDRSDRAM), an enhanced synchronous dynamic random-access memory (ESDRAM), a synchronous link dynamic random-access memory (SLDRAM), and a direct memory bus random access memory (DRRAM). It should be noted that the memory used in the method described herein is intended to include but be noted limited to these and any other suitable type of memories.

An embodiment of the present disclosure further provides a computer-readable storage medium configured to non-transiently store computer-executable instructions, where the computer-executable instructions, when executed by a processor, implement the data processing method provided in at least one embodiment of the present disclosure. Similarly, the computer-readable storage medium in the embodiment of the present disclosure may be a volatile memory or a non-volatile memory, or may include both of the volatile and non-volatile memories. For example, the computer-readable storage medium may be the above-mentioned storage medium 602. It should be noted that the memory used in the method described herein is intended to include but be noted limited to these and any other suitable type of memories.

An embodiment of the present disclosure further provides a computer program product or a computer program. The computer program product or the compute program includes computer instructions which are stored in a computer-readable storage medium. A processor of a computer device reads the computer instructions from the computer-readable storage medium, and the processor executes the computer instructions to cause the computer device to perform the data processing method according to the embodiment of the present disclosure.

For the present disclosure, the following points need to be noted:

(1) The accompanying drawings in the embodiments of the present disclosure only involve structures involved in the embodiments of the present disclosure, and other structures may be designed as usual.

(2) For the sake of clarity, the thicknesses and sizes of layers or structures in the accompanying drawings for describing the embodiments of the present disclosure are scaled up. It will be understood that when a component such as a layer, a film, a region or a substrate is referred to as being located "on" or "below" another component, the component may be "directly" located "on" or "below" another component, or there may be an intermediate component.

(3) The embodiments of the present disclosure and the features in the embodiments can be combined with one another to derive new embodiments without conflict.

The foregoing are merely descriptions of specific embodiments of the present disclosure, but the protection scope of the present disclosure is not limited thereto. The protection scope of the present disclosure is subject to the protection scope of the claims.

## Claims

1. A data processing method, applied to a matrix operation and comprising:

determining at least one first vector register storing a first matrix and at least one second vector register storing a second matrix, wherein the first matrix comprises a plurality of pieces of first operational data, and the second matrix comprises a plurality of pieces of second operational data;
obtaining first data selection information and second data selection information;
selecting at least one piece of first operational data from the plurality of pieces of first operational data based on the first data selection information to obtain at least one piece of first target operational data, and replicating the at least one piece of first target operational data at a multiple which is equal to a second matrix dimension number of the second matrix and providing the first target operational data, which is replicated, to a plurality of arithmetic units to determine a plurality of first multiplication factors in one-to-one correspondence to the plurality of arithmetic units; and

selecting at least one piece of second operational data from the plurality of pieces of second operational data based on the second data selection information to obtain at least one piece of second target operational data, and replicating the at least one piece of second target operational data at a multiple which is equal to a first matrix dimension number of the first matrix and providing the second target operational data, which is replicated, to the plurality of arithmetic units to determine a plurality of second multiplication factors in one-to-one correspondence to the plurality of arithmetic units,

wherein the first matrix dimension number and the second matrix dimension number are both positive integers, and a type of the first matrix dimension number is different from a type of the second matrix dimension number.

2. The data processing method according to claim 1, wherein the at least one piece of first target operational data comprises M pieces of first target operational data; the plurality of arithmetic units comprise P arithmetic unit groups and each arithmetic unit group comprises M arithmetic units; the second matrix dimension number is P; M and P are both positive integers;

the replicating the at least one piece of first target operational data at the multiple which is equal to the second matrix dimension number of the second matrix and providing the first target operational data, which is replicated, to the plurality of arithmetic units to determine the plurality of first multiplication factors in one-to-one correspondence to the plurality of arithmetic units comprise:
replicating the M pieces of first target operational data for P times to obtain P sets of first target operational data, wherein each set of first target operational data comprises the M pieces of first target operational data; and providing the P sets of first target operational data to the P arithmetic unit groups, respectively, to determine the plurality of first multiplication factors, wherein M first multiplication factors corresponding to the M arithmetic units of each arithmetic unit group are the M pieces of first target operational data, respectively.

3. The data processing method according to claim 1, wherein the at least one piece of second target operational data comprises P pieces of second target operational data; the plurality of arithmetic units comprise P arithmetic unit groups and each arithmetic unit group comprises M arithmetic units; the first matrix dimension number is M; M and P are both positive integers;

the replicating the at least one piece of second target operational data at the multiple which is equal to the first matrix dimension number of the first matrix and providing the second target operational data, which is replicated, to the plurality of arithmetic units to determine the plurality of second multiplication factors in one-to-one correspondence to the plurality of arithmetic units comprise:
replicating the P pieces of second target operational data for M times to obtain P sets of second target operational data, wherein each set of second target operational data corresponds to one piece of second target operational data and comprises M pieces of same second target operational data; and providing the P sets of second target operational data to the P arithmetic unit groups, respectively, to determine the plurality of second multiplication factors, wherein M second multiplication factors corresponding to the M arithmetic units of each arithmetic unit group are the same and are the second target operational data in the set of second target operational data corresponding to each arithmetic unit group.

4. The data processing method according to any one of claims 1 to 3, wherein the matrix operation comprises a plurality of threads; the plurality of arithmetic units correspond to the plurality of threads, respectively; the at least one first vector register has a plurality of first paths; the at least one second vector register has a plurality of second paths; each of the plurality of threads corresponds to a corresponding first path of the plurality of first paths and a corresponding second path of the plurality of second paths; the plurality of pieces of first operational data correspond to the plurality of first paths, and the plurality of pieces of second operational data correspond to the plurality of second paths;

the selecting at least one piece of first operational data from the plurality of pieces of first operational data based on the first data selection information to obtain at least one piece of first target operational data comprises:
based on the first data selection information, determining at least one first path selected from the plurality of first paths and taking at least one piece of first operational data corresponding to the at least one first path, which is selected, as the at least one piece of first target operational data; and
the selecting at least one piece of second operational data from the plurality of pieces of second operational data based on the second data selection information to obtain at least one piece of second target operational data comprises:
based on the second data selection information, determining at least one second path selected from the plurality of second paths and taking at least one piece of second operational data corresponding to the at least one second path, which is selected, as the at least one piece of second target operational data.

5. The data processing method according to any one of claims 1 to 4, further comprising:
determining at least one destination vector register;

performing a multiplication operation by the plurality of arithmetic units based on the plurality of first multiplication factors and the plurality of second multiplication factors to obtain a plurality of multiplication operation results corresponding to the plurality of arithmetic units, wherein each arithmetic unit is configured to perform the multiplication operation on a first multiplication factor and a second multiplication factor corresponding to each arithmetic unit to obtain a multiplication operation result corresponding to each arithmetic unit; and transmitting the plurality of multiplication operation results to the at least one destination vector register.

6. The data processing method according to claim 5, wherein the transmitting the plurality of multiplication operation results to the at least one destination vector register comprises:
performing an addition operation on the plurality of multiplication operation results and a plurality of pieces of storage data stored in the at least one destination vector register, in one-to-one correspondence, to obtain a plurality of addition operation results; and storing the plurality of addition operation results in the at least one destination vector register.

7. The data processing method according to any one of claims 1 to 6, wherein the obtaining first data selection information and second data selection information comprises:

obtaining a data selection instruction; and
parsing the data selection instruction to obtain the first data selection information and the second data selection information.

8. The data processing method according to any one of claims 1 to 7, wherein the at least one first vector register comprises a first target vector register and the at least one piece of first target operational data is stored in the first target vector register; and
the at least one second vector register comprises a second target vector register and the at least one piece of second target operational data is stored in the second target vector register.

9. The data processing method according to any one of claims 1 to 8, wherein the first matrix is a column matrix and the at least one piece of first target operational data is located in a same column of the first matrix; and
the second matrix is a row matrix and the at least one piece of second target operational data is located in a same row of the second matrix.

10. The data processing method according to any one of claims 1 to 9, wherein the determining at least one first vector register storing the first matrix and at least one second vector register storing the second matrix comprises:

obtaining at least one first address and at least one second address;
determining the at least one first vector register based on the at least one first address; and
determining the at least one second vector register based on the at least one second address.

11. The data processing method according to claim 10, wherein the obtaining at least one first address and at least one second address comprises:

obtaining a matrix operation instruction; and
parsing the matrix operation instruction to obtain the at least one first address and the at least one second address.

12. The data processing method according to any one of claims 1 to 11, wherein the obtaining first data selection information and second data selection information comprises:
parsing the matrix operation instruction to obtain the first data selection information and the second data selection information.

13. The data processing method according to any one of claims 1 to 12, further comprising:
obtaining at least one first data reading instruction and at least one second data reading instruction;

parsing the at least one first data reading instruction to obtain at least one first read address and at least one first address;

reading the plurality of pieces of first operational data from a memory based on the at least one first read address, and based on the at least one first address, determining the at least one first vector register and writing the plurality of pieces of first operational data in the at least one first vector register;

parsing the at least one second data reading instruction to obtain at least one second read address and at least one second address; and

reading the plurality of pieces of second operational data from the memory based on the at least one second read address, and based on the at least one second address, determining the at least one second vector register and writing the plurality of pieces of second operational data in the at least one second vector register.

14. The data processing method according to any one of claims 1 to 13, wherein the plurality of arithmetic units concurrently perform a multiplication operation.

15. A data processing apparatus, applied to a matrix operation,
wherein the data processing apparatus comprises:

a register determination unit, configured to determine at least one first vector register storing a first matrix and at least one second vector register storing a second matrix, wherein the first matrix comprises a plurality of pieces of first operational data, and the second matrix comprises a plurality of pieces of second operational data;

an information obtaining unit, configured to obtain first data selection information and second data selection information;

a data selection unit, configured to select at least one piece of first operational data from the plurality of pieces of first operational data based on the first data selection information to obtain at least one piece of first target operational data and select at least one piece of second operational data from the plurality of pieces of second operational data based on the second data selection information to obtain at least one piece of second target operational data; and

a data broadcasting unit, configured to replicate the at least one piece of first target operational data at a multiple which is equal to a second matrix dimension number of the second matrix and provide the first target operational data, which are replicated, to a plurality of arithmetic units to determine a plurality of first multiplication factors in one-to-one correspondence to the plurality of arithmetic units, and replicate the at least one piece of second target operational data at a multiple which is equal to a first matrix dimension number of the first matrix and provide the second target operational data, which are replicated, to the plurality of arithmetic units to determine a plurality of second multiplication factors in one-to-one correspondence to the plurality of arithmetic units,

wherein the first matrix dimension number and the second matrix dimension number are both positive integers, and a type of the first matrix dimension number is different from a type of the second matrix dimension number.

16. A data processing device, comprising:

a processor; and
a storage medium storing computer-executable instructions,
wherein the computer-executable instructions, when executed by the processor, implement the data processing method according to any one of claims 1 to 14.

17. A computer-readable storage medium, configured to non-transiently store computer-executable instructions, wherein the computer-executable instructions, when executed by a processor, implement the data processing method according to any one of claims 1 to 14.

**100**

| determining at least one first vector register storing a first matrix and at least one second vector register storing a second matrix, where the first matrix comprises a plurality of pieces of first operational data, and the second matrix includes a plurality of pieces of second operational data | S101 |

↓

| obtaining first data selection information and second data selection information | S102 |

↓

| selecting at least one piece of first operational data from the plurality of pieces of first operational data based on the first data selection information to obtain at least one piece of first target operational data, providing the at least one piece of first target operational data at a multiple which is equal to a second matrix dimension number of the second matrix to a plurality of arithmetic units to determine a plurality of first multiplication factors in one-to-one correspondence to the plurality of arithmetic units | S103 |

↓

| selecting at least one piece of second operational data from the plurality of pieces of second operational data based on the second data selection information to obtain at least one piece of second target operational data, providing the at least one piece of second target operational data at a multiple which is equal to a first matrix dimension number of the first matrix to the plurality of arithmetic units to determine a plurality of second multiplication factors in one-to-one correspondence to the plurality of arithmetic units | S104 |

↓

| determining at least one destination vector register | S105 |

↓

| performing a multiplication operation by the plurality of arithmetic units based on the plurality of first multiplication factors and the plurality of second multiplication factors to obtain a plurality of multiplication operation results corresponding to the plurality of arithmetic units, where each arithmetic unit is configured to perform the multiplication operation on a first multiplication factor and a second multiplication factor corresponding to each arithmetic unit to obtain a multiplication operation result corresponding to each arithmetic unit | S106 |

↓

| transmitting the plurality of multiplication operation results to the at least one destination vector register | S107 |

FIG. 1

FIG. 2

A(8,4)     *     B(4,4)     =     C(8,4)

FIG. 3

**400**

Register Determination Unit 401

Information Obtaining Unit 402

Data Selection Unit 403

First Selector 4031

Second Selector 4032

Data Broadcasting Unit 404

FIG. 4

Data Selection Unit 403

Data Broadcasting Unit 404

Second Vector Register

Path 0~3

......

Path 28~31

Selector B

SRC2_SVF_MODE

Path 0~7

Path 8~15

Path 16~23

Path 24~31

First Vector Register

Path 0~7

Path 8~15

Path 16~23

Path 24~31

Selector A

SRC1_SVF_MODE

Path 0~7

Path 8~15

Path 16~23

Path 24~31

Multiplier Group

Multiplier Group

Multiplier Group

Multiplier Group

Multiplier Group

Adder Group

Adder Group

Adder Group

Adder Group

Destination Vector Register

Cache

DDR

FIG. 5

**600**

Processor
601

Storage Medium
602

Bus
603

FIG. 6

| INTERNATIONAL SEARCH REPORT | International application No. |
|---|---|
| | **PCT/CN2022/092990** |

### A. CLASSIFICATION OF SUBJECT MATTER

G06F 17/16(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT, WPABS, CNABS, DWPI, ENTXT, VEN, CNKI: 矩阵, 运算, 乘法, 寄存器, 选择, 复制, 读取, 操作, 单指令流多数据流, 线程, matrix, calculate, multiple, register, select, duplicate, read, operate, SIMD, thread

### C. DOCUMENTS CONSIDERED TO BE RELEVANT

| Category* | Citation of document, with indication, where appropriate, of the relevant passages | Relevant to claim No. |
|---|---|---|
| PX | CN 113722669 A (HYGON INFORMATION TECHNOLOGY CO., LTD.) 30 November 2021 (2021-11-30) claims 1-17, and description, paragraphs 22-125 | 1-17 |
| X | CN 112182496 A (CHENGDU HAIGUANG INTEGRATED CIRCUIT DESIGN CO., LTD.) 05 January 2021 (2021-01-05) description, paragraphs 29-82 and 94-99 | 1-17 |
| X | US 2020341772 A1 (DEGIRUM CORP.) 29 October 2020 (2020-10-29) description, paragraphs 3-15, 20-29, and 74-130 | 1-17 |
| A | CN 112506567 A (HYGON INFORMATION TECHNOLOGY CO., LTD.) 16 March 2021 (2021-03-16) entire document | 1-17 |
| A | US 7912889 B1 (NVIDIA CORP.) 22 March 2011 (2011-03-22) entire document | 1-17 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 July 2022** | **22 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| PCT/CN2022/092990 |

| Patent document cited in search report | | | Publication date (day/month/year) | Patent family member(s) | | | Publication date (day/month/year) |
|---|---|---|---|---|---|---|---|
| CN | 113722669 | A | 30 November 2021 | CN | 113722669 | B | 21 January 2022 |
| CN | 112182496 | A | 05 January 2021 | WO | 2022062004 | A1 | 31 March 2022 |
| US | 2020341772 | A1 | 29 October 2020 | TW | 202109287 | A | 01 March 2021 |
| | | | | US | 2021406030 | A1 | 30 December 2021 |
| | | | | KR | 20220002295 | A | 06 January 2022 |
| | | | | CA | 3137873 | A1 | 05 November 2020 |
| | | | | EP | 3963462 | A1 | 09 March 2022 |
| | | | | WO | 2020222971 | A1 | 05 November 2020 |
| | | | | CN | 113748417 | A | 03 December 2021 |
| CN | 112506567 | A | 16 March 2021 | None | | | |
| US | 7912889 | B1 | 22 March 2011 | None | | | |

Form PCT/ISA/210 (patent family annex) (January 2015)

**REFERENCES CITED IN THE DESCRIPTION**

**Patent documents cited in the description**

- CN 202111291162